# EUROPÄISCHE PATENTANMELDUNG

(11) **EP 3 929 518 A1**
(43) Veröffentlichungstag der Anmeldung: **29.12.2021**
(21) Anmeldenummer: 21178678.5
(22) Anmeldetag: 10.06.2021
(51) Int. Cl.: F28D 1/00

(54) **VERDAMPFER SOWIE KLIMASCHRANK**

(30) Priorität: 26.06.2020 DE 102020116969
(71) Anmelder: Binder GmbH, 78532 Tuttlingen (DE)
(72) Erfinder: BUSCHLE, Jochen, 78532 Nendingen (DE); RENNER, Ludwig, 78357 Mühlingen (DE)
(74) Vertreter: Westphal, Mussgnug & Partner Patentanwälte mbB

(57) **Zusammenfassung**

Die vorliegende Erfindung betrifft einen Verdampfer (2) für einen Klimaschrank (1), insbesondere für einen Konstantklimaschrank mit einer Temperatur- und Feuchtigkeitsregelung, aufweisend einen ersten Einlass (31), einen zweiten Einlass (32) und einen Auslass (35) für ein Kältemittel, wobei der erste Einlass (31), der zweite Einlass (32) und der Auslass (35) durch einen Kanal (20) miteinander verbunden sind, und wobei der zweite Einlass (32) zwischen dem ersten Einlass (31) und dem Auslass (35) angeordnet ist. Darüber hinaus betrifft die vorliegende Erfindung einen Klimaschrank (1) mit einem Verdampfer (2).

## Beschreibung

Die vorliegende Erfindung betrifft einen Verdampfer für einen Klimaschrank, insbesondere für einen Konstantklimaschrank mit einer Temperatur- und Feuchtigkeitsregelung mit Merkmalen des Patentanspruchs 1 sowie einen Klimaschrank mit den Merkmalen des Patentanspruchs 12.

Klimaschränke sind aus dem Stand der Technik in unterschiedlichen Ausgestaltungen vorbekannt und werden in wissenschaftlichen Laboren oder im industriellen Einsatz zur Simulation von biologischen, chemischen und/oder physikalischen Umwelteinflüssen, wie beispielsweise Temperatur, Luftdruck und/oder Luftfeuchtigkeit verwendet. Ein Klimaschrank umfasst einen Innenraum und ein Gehäuse, wobei der Innenraum in dem Gehäuse angeordnet ist und in dem Innenraum die biologischen, chemischen und/oder physikalischen Umwelteinflüsse simuliert werden.

Zur Kühlung und zur Entfeuchtung des Innenraums weisen die aus dem Stand der Technik bekannten Klimaschränke einen Kältekreislauf auf, aufweisend einen Verdichter, der ein Kältemittel in einem geschlossenen Kreislauf ausgangsseitig zu einem ersten Wärmetauscher ausgibt, der Wärme aus dem Kältekreislauf an eine Umgebung abgeben kann. Das Kältemittel wird über eine Drossel zu einem Verdampfer geführt und eingangsseitig zurück zu dem Verdichter geleitet. Der Verdampfer ist mit der Luft in dem Innenraum thermisch gekoppelt, wobei durch ein Verdampfen des Kältemittels dem Innenraum Wärme entzogen werden kann. Bei dem Entziehen von Wärme aus dem Innenraum kann der Taupunkt unterschritten werden und Feuchtigkeit aus dem Innenraum kann kondensieren. Das daraus resultierende flüssige Medium kann aus dem Innenraum abgeführt werden.

Im Stand der Technik werden zu diesem Zweck Verdampfer, insbesondere Plattenverdampfer, verwendet, welche zwei getrennte Bereiche für die Kühlung und die Entfeuchtung der Luft in dem Innenraum aufweisen, wobei jeder der Bereiche einen einzelnen Einlass und einen Auslass aufweist, um sowohl eine kontrollierte Kühlung und/oder Entfeuchtung der Luft in dem Innenraum erfolgen kann.

Als Nachteil hat sich an diesem Stand der Technik herausgestellt, dass für die Kühlung bei höchster Feuchte nicht die komplette Fläche des Verdampfers für die Kühlung genutzt werden kann. Der Taupunkt kann unterschritten werden und eine ungewollte Entfeuchtung der Luft kann erfolgen. Darüber hinaus hat sich die Leitung des Kühlmittels zwischen dem Verdichter und dem Verdampfer als aufwändig erwiesen. Die beiden Auslässe der getrennten Bereiche müssen zunächst zusammengeführt werden um anschließend eingangsseitig an dem Verdichter angeschlossen zu werden.

Hier setzt die vorliegende Erfindung an.

Die vorliegende Erfindung widmet sich der Aufgabe, einen verbesserten Verdampfer für einen Klimaschrank mit einer Kühlung und einer Entfeuchtung bereitzustellen, der in zweckmäßiger Weise die aus dem Stand der Technik bekannten Nachteile beseitigt.

Diese Aufgabe wird durch einen Verdampfer mit den Merkmalen des Patentanspruchs 1 sowie durch einen Klimaschrank mit den Merkmalen des Patentanspruchs 12 gelöst.

Weitere vorteilhafte Ausgestaltungen der vorliegenden Erfindung werden in den Unteransprüchen angegeben.

Der erfindungsgemäße Verdampfer für einen Klimaschrank, insbesondere für einen Konstantklimaschrank mit einer Temperatur- und Feuchtigkeitsregelung, weist einen ersten Einlass, einen zweiten Einlass und einen Auslass für ein Kältemittel auf, wobei der erste Einlass, der zweite Einlass und der Auslass mit einem Kanal verbunden sind, und wobei der zweite Einlass zwischen dem ersten Einlass und dem gemeinsamen Auslass angeordnet ist und in den Kanal mündet.

Der vorliegenden Erfindung liegt die Idee zugrunde, einen Verdampfer bereitzustellen, der nicht - wie bisher im Stand der Technik - zwei getrennte Bereiche aufweist, sondern einen einzigen Bereich, der für die Kühlung verwendet werden kann. Für die Kühlung über den gesamten Verdampfer kann ein Kühlmittel durch den ersten Einlass in den einflutigen Kanal in den Verdampfer einströmen und durch den Auslass wieder hinaus, wodurch im Gegensatz zu den bisher bekannten Verdampfern bei gleicher Baugröße eine höhere Kühlleistung erreicht werden kann, da der gesamte Verdampfer für die Kühlung zur Verfügung steht. Durch die höhere Kühlleistung kann die Differenz zwischen dem Taupunkt und der Temperatur im Innenraum klein gehalten werden, wodurch eine ungewollte Entfeuchtung des Innenraums im Feuchtebetrieb vermieden werden kann.

Für die Entfeuchtung hat der Verdampfer einen zweiten Einlass, welcher zwischen dem ersten Einlass und dem Auslass angeordnet ist, durch den zusätzliches Kühlmittel in den Kanal eingebracht werden kann. Durch das zusätzliche Einbringen von Kühlmittel kann eine Absenkung der Temperatur des Kühlmittelgemisches unter den Taupunkt der Luft aus dem Innenraum des Klimaschranks zumindest bereichsweise erfolgen, wodurch Feuchtigkeit auskondensiert und ein Kondensat erzeugt wird, das abgeführt werden kann. Daraus resultiert eine Entfeuchtung der Luft in dem Innenraum des Klimaschranks.

Eine Weiterbildung der vorliegenden Erfindung sieht vor, dass der Kanal einen ersten Endbereich und einen zweiten Endbereich aufweist, dass der erste Einlass im ersten Endbereich und der Auslass im zweiten Endbereich angeordnet ist. Besonders bevorzugt bildet der erste Einlass das erste Ende des Kanals und der Auslass das zweite gegenüberliegende Ende, wodurch der Kanal vollständig von einem durch den ersten Einlass einströmendes Kühlmittel durchströmt werden kann.

Gemäß einer weiteren Maßgabe der vorliegenden Erfindung kann der Kanal eine erste Leitungslänge L1 zwischen dem ersten Einlass und dem Auslass und eine zweite Leitungslänge L2 zwischen dem zweiten Einlass und dem Auslass aufweisen, wobei die erste Leitungslänge L1 größer ist, als die zweite Leitungslänge L2, also L1 > L2. Insbesondere ist es bevorzugt, wenn die erste Leitungslänge L1 mindestens doppelt so groß ist wie die zweite Leitungslänge L2, also L1 ≥ 2·L2, wobei noch weiter bevorzugt ist, wenn folgendes gilt: L1 ≥ 3·L2. Somit ist der von dem Kühlmittel zurückgelegte Weg in dem Kanal zwischen dem ersten Einlass und den zweiten Einlass größer als die darauffolgende durchströmte Wegstrecke zwischen dem zweiten Einlass und dem gemeinsamen Auslass.

Eine Weiterbildung der vorliegenden Erfindung sieht vor, dass der Verdampfer als Plattenverdampfer ausgebildet ist. Bevorzugt umfasst der Plattenverdampfer mindestens eine Edelstahlverdampferplatte, über welche ein Wärmeübertrag aus dem Innenraum eines Klimaschranks in das Kältemittel in dem Kanal erfolgen kann. Edelstahl hat sich bewährt, weil dieser Werkstoff sowohl eine thermisch, chemisch als auch mechanisch beständige Oberfläche aufweist.

Darüber hinaus können der erste Einlass, der zweite Einlass, der Auslass und der Kanal in einer gemeinsamen Ebene angeordnet sein, wodurch ein kompakter Plattenverdampfer bereitgestellt ist, der eine möglichst hohe Leistungsdichte aufweisen kann.

Eine Weiterbildung des erfindungsgemäßen Verdampfers sieht vor, dass der Verdampfer ein Gehäuse aufweist, welches den Kanal umschließt, wobei in dem Gehäuse der Kanal mäanderförmig zwischen dem ersten Einlass und dem Auslass geführt ist. Durch den mäanderförmigen Verlauf des Kanals in dem Gehäuse wird eine Flächenvergrößerung des Kanals erreicht, wodurch höhere Wärmeströme erreicht werden können.

Weiterhin kann gemäß einer Weiterbildung der vorliegenden Erfindung mindestens ein Umlenkmittel in dem Gehäuse vorgesehen sein, durch welche das Medium in dem Gehäuse umgelenkt werden kann. Das mindestens eine Umlenkmittel kann den mäanderförmigen Verlauf des Kanals vorgeben, wobei bevorzugt eine Mehrzahl von Umlenkmitteln in dem Gehäuse kaskadenartig angeordnet ist. Die Umlenkmittel können abwechselnd von gegenüberliegenden Seiten des Gehäuses in das Gehäuse kammartig ineinander ragen, wobei zwischen zwei benachbarten Umlenkmitteln oder zwischen einem Umlenkmittel und einer Wandung des Gehäuses der Kanal ausgebildet ist.

Darüber hinaus kann an mindestens einem freien Ende des mindestens einen Umlenkmittels ein Umlenkabschnitt ausgebildet sein, an dem eine Umlenkung des Kühlmittels in dem Kanal vorzugsweise um 180° erfolgt. In den jeweiligen Umlenkabschnitt fließt das Kühlmittel eingangsseitig auf einer ersten Seite des platten- oder stegförmigen Umlenkmittels und ausgangsseitig auf einer zweiten, der ersten Seite gegenüberliegenden, Seite des Umlenkmittels.

Gemäß einer weiteren Maßgabe der vorliegenden Erfindung kann in einem Umlenkabschnitt der zweite Einlass angeordnet sein. Der zweite Einlass ist in einer bevorzugten Weiterbildung dabei derart versetzt in dem Umlenkabschnitt angeordnet, dass das durch den zweiten Einlass eingebrachte Kühlmittel ausgangsseitig in den Umlenkabschnitt eingebracht wird.

Mehrere Umlenkmittel sind gemäß einer Weiterbildung zueinander beabstandet angeordnet, wobei ein Abstand zwischen den Umlenkmitteln einen Querschnitt des Kanals vorgibt. Insbesondere ist es bevorzugt, wenn die Umlenkmittel parallel und beabstandet angeordnet sind, wobei der Abstand zwischen den Umlenkmitteln ausgehend vom ersten Einlass bis zum Auslass zunehmen kann, um Änderungen in der Dichte des Kühlmittels zwischen dem ersten Einlass und dem Auslass Rechnung zu tragen.

Insbesondere kann gemäß einer Weiterbildung der vorliegenden Erfindung ein erster Kanalquerschnitt zwischen dem ersten Einlass und dem zweiten Einlass kleiner sein, als ein zweiter Kanalabschnitt, zwischen dem zweiten Einlass und dem gemeinsamen Auslass, um den sich beim zweiten Einlass addierenden Kühlmittelströmen Rechnung zu tragen.

Ein weiterer Aspekt der vorliegenden Erfindung betrifft einen Klimaschrank, insbesondere einen Konstantklimaschrank, mit einem Innenraum und einem zum Einstellen einer Temperatur und einer Feuchtigkeit in dem Innenraum konfigurierten Kältekreislauf mit einem Verdichter und einem Verdampfer, wobei der Verdampfer einen ersten Einlass, einen zweiten Einlass und einen Auslass für das Kältemittel des Kältekreislaufes aufweist, wobei der erste Einlass, der zweite Einlass und der gemeinsame Auslass mit einem gemeinsamen Kanal verbunden sind, und wobei der zweite Einlass zwischen dem ersten Einlass und dem gemeinsamen Auslass in den Kanal mündet. Der Kanal ist vorzugsweise einflutig ausgebildet.

Eine Weiterbildung des erfindungsgemäßen Klimaschranks sieht vor, dass der Verdichter eingangsseitig mit dem Auslass und ausgangsseitig parallelgeschaltet mit dem ersten Einlass und dem zweiten Einlass des Verdampfers verbunden ist. Vorzugsweise ist ausgangsseitig zwischen dem Verdichter und dem Verdampfer ein luftgekühlter Wärmeübertrager, insbesondere ein Rippenrohr-Wärmeübertrager mit Axialgebläse, vorgesehen, durch den Wärme an die Umgebung des Klimaschranks abgegeben werden kann. Weiterhin ist es bevorzugt, wenn zwischen dem Verdichter und dem Verdampfer ein Filter, insbesondere ein Festbettfilter wie z.B. ein Trockner, angeordnet ist, bevor das ausgangsseitig aus dem Verdichter kommende Kältemittel zu dem parallel geschalteten ersten Einlass und dem zweiten Einlass geleitet wird, wobei an dem ersten Einlass und/oder dem zweiten Einlass ein Ventil, insbesondere ein elektromagnetischer Stellantrieb, durch das ein Durchfluss des Kältemittels zu dem ersten Einlass und/oder dem zweiten Einlass reguliert werden kann, vorgesehen ist. Das dem ersten Einlass und/oder dem zweiten Einlass vorgelagerte Ventil kann ebenso einer entsprechenden Drosselung des Kältekreislaufes dienen.

Auch hat es sich als vorteilhaft erwiesen, wenn zwischen dem gemeinsamen Auslass des Verdampfers und dem Verdichter ein Flüssigfilter angeordnet ist.

Darüber hinaus sieht eine Weiterbildung der vorliegenden Erfindung vor, dass der Verdichter ein Kolbenverdichter ist. Kolbenverdichter können hohe Druckverhältnisse realisieren.

Nachfolgend wird unter Bezugnahme auf die begleitende Zeichnung ein Ausführungsbeispiel eines Kältekreislaufs eines Klimaschranks mit einem erfindungsgemäßen Verdampfer beschrieben. Es zeigen:
- Figur 1: einen vereinfachten und exemplarischen Kältekreislauf mit einem erfindungsgemäßen Verdampfer, und
- Figur 2: eine stark vereinfachte, teilweise geschnittene und perspektivische Darstellung eines Verdampfers für einen Kältekreislauf gemäß Figur 1.

Gleiche oder funktional gleiche Bauteile werden mit den gleichen Bezugszeichen gekennzeichnet. Darüber hinaus sind in den Figuren nicht alle gleichen oder funktional gleichen Bauteile mit einer Bezugsziffer versehen.

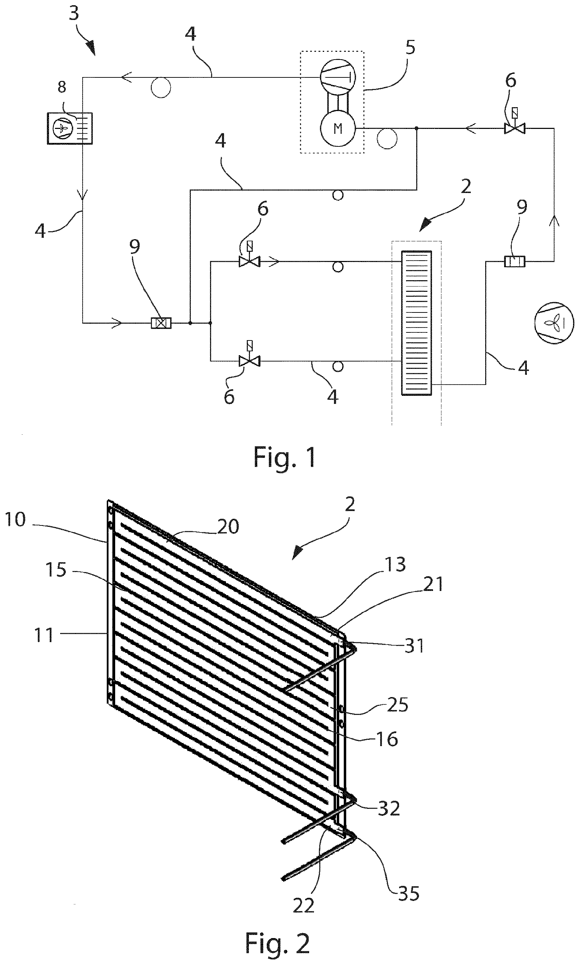

Figur 1 zeigt einen exemplarischen Kältekreislauf 3 eines Klimaschrankes 2, aufweisend einen Verdichter 5, einen ersten Wärmetauscher 8, Ventile 6, einen Verdampfer 2 und Leitungen 4, die die Bestandteile des Kältekreislaufes 3 miteinander verbinden. Das von dem Verdichter 5 ausgangseitig kommende Kühlmittel wird über die Leitung 4 zu einem Wärmetauscher 8 geleitet. Der Wärmetauscher 8 kann Wärme an die Umgebung des Klimaschrankes 1 abgeben und zu diesem Zweck als ein Rippenrohr-Wärmeübertrager mit Axialgebläse ausgebildet sein. Durch die Wärmeabgabe an die Umgebung kann das Kältemittel vorzugsweise verflüssigt werden. Über ein T-Stück verbindet die Leitung 4 die Wärmetauscher 8 mit zwei parallel geschalteten Ventilen 6, die wiederum mit dem Verdampfer 2 - wie später beschrieben wird - verbunden sind. Der Verdampfer 2 ist in dem Kältekreislauf 3 sowohl ein Expansionsorgan als auch ein Wärmeübertrager, der Wärme aus dem Innenraum des Klimaschranks 1 auf das Kältemittel übertragen kann.

Wie bereits aus dem Kältekreislauf 3 gemäß Figur 1 ersichtlich ist, weist der Verdampfer 2 für das Kühlmittel einen ersten Einlass 31, einen zweiten Einlass 32 sowie einen gemeinsamen Auslass 35 auf, wobei durch den gemeinsamen Auslass 35 sowohl das durch den ersten Einlass 31 als auch das durch den zweiten Einlass 32 strömende Kühlmittel wieder aus dem Verdampfer 2 austreten kann und über die Leitung 4 eingangsseitig zu dem Verdichter 5 geführt wird.

Der erste Einlass 31 und der zweite Einlass 32 sind ausgangsseitig mit dem Verdichter 5 verbunden, wobei der Verdichter 5 ein Kolbenkompressor sein kann. Das von dem Verdichter 5 kommende Kühlmittel wird über das T-Stück zu dem parallelgeschalteten ersten Einlass 31 und zweiten Einlass 32 geführt, wobei dem jeweiligen Einlass 31, 32 jeweils ein Ventil 6 vorgeschaltet ist, welches einen Kühlmittelstrom zu dem jeweiligen Einlass 31, 32 regeln kann.

Der Kältekreislauf 3 kann weiterhin Filter 9 aufweisen, wobei dem T-Stück bzw. den Ventilen 6 bzw. dem Verdampfer 2 ein Festbettfilter vorgeschaltet sein kann und dem Verdampfer 2 ein Flüssigfilter nachgeschaltet sein kann.

Zu Steuerungs- und Regelungszwecken kann weiterhin ein Bypass vorgesehen sein, der das Kältemittel vor den Ventilen 6 eingangsseitig zu dem Verdichter 5 zurückgeführt.

Weiterhin kann ein Ventil 6 zwischen dem Flüssig-Filter 9 und der Mündung des Bypasses auf der Eingangsseite des Verdichters 5 angeordnet sein.

Unter Bezugnahme auf die Figur 2 ist ersichtlich, dass der Verdampfer 2 als Plattenverdampfer mit einem Gehäuse 10 ausgebildet ist, wobei das Gehäuse 10 einen Rahmen 11 und zwei Platten 12, 13 umfassen kann, welche auf gegenüberliegenden Seiten des Rahmens 11 angeordnet sind und zusammen mit dem Rahmen 11 einen Kanal 20 im Inneren des Gehäuses 10 einschließen können, durch den das Kühlmittel von dem ersten Einlass 31 und dem zweiten Einlass 32 zu dem gemeinsamen Auslass 35 strömen kann. In der Schnittdarstellung gemäß Figur 2 ist die Platte 12 nicht dargestellt.

Das Gehäuse 10 bzw. die Platten 12, 13 können bevorzugter Weise aus Edelstahl hergestellt sein.

In dem Gehäuse 10 sind eine Mehrzahl von Umlenkmittel 15 kaskadenförmig angeordnet, wodurch der Kanal 20 mäanderförmig in dem Gehäuse 10 ausgebildet ist. Die Umlenkmittel 15 sind vorzugsweise flüssigkeits- und/oder gasdicht mit den Platten 12, 13 verbunden und weiterhin parallel und beabstandet angeordnet. Von gegenüberliegenden Seiten stehen die Umlenkmittel 15 abwechselnd ab und bilden an ihren freien Enden 16 einen Umlenkabschnitt 25. Zur besseren Übersichtlichkeit sind nur ausgewählte Umlenkmittel 15 und Umlenkabschnitte 25 mit einem Bezugszeichen versehen. In dem Umlenkabschnitt 25 wird der Kanal 20 um 180° umgelenkt, wobei das Kühlmittel in dem Umlenkabschnitt 25 von einem eingangsseitigen Kanalabschnitt auf einer ersten Seite des jeweiligen Umlenkmittels 15 um das freie Ende 16 zu einer der ersten Seite gegenüberliegenden zweiten Seite des jeweiligen Umlenkmittels 15 in einen ausgangsseitigen Kanalabschnitt um 180° umgelenkt wird.

Der Kanal 20 erstreckt sich als geschlossene einflutige Leitung von einem ersten Endbereich 21 (in Figur 2 rechts oben) bis zu einem zweiten Endbereich 22 (in Figur 2 rechts unten). In dem ersten Endbereich 21 ist der erste Einlass 31 angeordnet und in dem zweiten Endbereich 22 ist der gemeinsame Auslass 35 angeordnet, währenddessen der zweite Einlass 32 in den Kanal 20 zwischen dem ersten Einlass 31 und dem gemeinsamen Auslass 35 mündet.

Eine erste Wegstrecke des Kanals 20 zwischen dem ersten Einlass 31 und dem zweiten Einlass 32 beträgt eine erste Leitungslänge L1 und eine zweite Wegstrecke zwischen dem zweiten Einlass 32 und dem gemeinsamen Auslass 35 beträgt eine Leitungslänge L2. Wie aus Figur 2 unmittelbar ersichtlich ist, ist die erste Leitungslänge L1 nennenswert größer als die zweite Leitungslänge L2. Vorzugsweise gilt: L1 ≥ L2. In dem dargestellten Ausführungsbeispiel ist L1 ≈ 4·L2.

Der zweite Einlass 32 mündet ebenfalls in dem Kanal 20, wodurch ein Kältemittelstrom, welcher durch den ersten Einlass 31 in den Kanal 20 gelangt sich mit einem zweiten Kältemittelstrom durch den zweiten Einlass 32 vermischen kann und gemeinsam zu dem gemeinsamen Auslass 35 durch den Kanal geleitet werden kann.

Der zweite Einlass 32 ist in einem der Umlenkabschnitte 25 angeordnet, wobei der zweite Einlass 32 derart in dem Umlenkabschnitt 25 angeordnet ist, dass der zweiten Einlass 32 zu dem ausgangsseitigen Kanalabschnitt des Umlenkabschnitts 25 ausgerichtet ist. Insbesondere ist es bevorzugt, wenn der zweite Einlass 32 fluchtend zu dem ausgangsseitigen Kanalabschnitt ausgerichtet ist.

In der ersten Wegstrecke des Kanals 20 zwischen dem ersten Einlass 31 und dem zweiten Einlass 32 weist der Kanal 20 einen ersten Kanalquerschnitt A1 auf, welcher gemäß dem dargestellten Ausführungsbeispiel konstant ist. Allerdings kann der erste Kanalquerschnitt A1 zwischen dem ersten Einlass 31 und dem zweiten Einlass 32 zunehmen, welches beispielsweise dadurch realisiert werden kann, dass der Abstand zwischen den Umlenkmitteln 15 zunimmt, um Dichteänderungen in dem Kühlmittel mit dem Ziel Rechnung zu tragen, dass die Geschwindigkeit des Kühlmittels entlang des Kanals 20 zwischen dem ersten Einlass 31 und dem zweiten Einlass 32 näherungsweise konstant ist.

Ein zweiter Kanalquerschnitt A2 kann ebenfalls konstant ausgebildet sein und kann dem ersten Kanalquerschnitt A1 entsprechen, allerdings ist es ebenfalls möglich, dass der zweite Kanalquerschnitt A2 größer bemessen ist, als der Kanalquerschnitt A1. Durch den zweiten Kanalquerschnitt A2 fließen sowohl ein Kühlmittelmassenstrom aus dem ersten Einlass 31 als auch ein Kühlmittelmassenstrom aus dem zweiten Einlass 32, weshalb der zweite Kanalquerschnitt A2 größer bemessen sein kann als der erste Kanalquerschnitt A1, um aufgrund des erhöhten Kühlmittelmassenstroms eine geringe Fließgeschwindigkeit zu erreichen.

Der (nicht dargestellte) Klimaschrank 1 ist als Konstantklimaschrank ausgebildet und weist sowohl eine Kühlung als auch eine Entfeuchtung auf, wodurch in einem (nicht dargestellten) Innenraum des Klimaschranks 1 definierte klimatische Bedingungen unter dem Aspekt der Luftfeuchtigkeit und der Temperatur eingestellt werden können. Über den Verdampfer 2 kann dem Innenraum Wärme entzogen werden, wobei zum Entziehen von Wärme aus dem Innenraum das Kältemittel durch den ersten Einlass 31 in den Verdampfer 2 einströmen kann und über den gesamten Verdampfer 2 eine hohe Kühlleistung erreicht werden kann. Im Feuchtbetrieb des Klimaschranks 1 soll ein bestimmter Feuchtigkeitswert in dem Innenraum des Klimaschranks 1 eingestellt werden, wobei es vorteilhaft ist, dass die Differenz zwischen dem Taupunkt auf einer der Oberflächen des Gehäuses 10 des Verdampfers 2 und einer Temperatur in dem Innenraum des Klimaschranks klein ist, um eine unnötige Kondensation an dem Verdampfer 2 zu vermeiden. Für den Fall, dass eine Entfeuchtung des Luftgemisches in dem Innenraum des Klimaschranks 1 erfolgen soll, kann durch den zweiten Einlass 32 weiteres Kühlmittel in den Kanal 20 eingeleitet werden, wodurch es zu einer Absenkung der Temperatur zwischen dem zweiten Einlass 32 und dem gemeinsamen Auslass 35 unter den Taupunkt kommt, weshalb an der Verdampferplatte Feuchtigkeit auskondensiert und die Feuchtigkeit in Form eines flüssigen Mediums aus dem Innenraum des Klimaschranks 1 abgeführt werden kann.

### Bezugszeichenliste

- 1: Klimaschrank
- 2: Verdampfer

- 3: Kältekreislauf
- 4: Leitung
- 5: Verdichter
- 6: Ventil
- 7: Filter
- 8: Wärmetauscher

- 10: Gehäuse
- 11: Rahmen
- 12: Platte
- 13: Platte
- 15: Umlenkmittel
- 15: Innenraum
- 16: freies Ende
- 20: Kanal
- 21: erster Endbereich
- 22: zweiter Endbereich
- 25: Umlenkabschnitt
- 31: erster Einlass
- 32: zweiter Einlass
- 35: Auslass

- A1: erster Kanalquerschnitt
- A2: zweiter Kanalquerschnitt
- L1: erste Leitungslänge
- L2: zweite Leitungslänge

## Patentansprüche

1. Verdampfer (2) für einen Klimaschrank (1), insbesondere für einen Konstantklimaschrank mit einer Temperatur- und Feuchtigkeitsregulierung, aufweisend:
- einen ersten Einlass (31), einen zweiten Einlass (32) und einen Auslass (35) für ein Kältemittel,
- wobei der erste Einlass (31), der zweite Einlass (32) und der Auslass (35) durch einen Kanal (20) miteinander verbunden sind, und
- wobei der zweite Einlass (32) zwischen dem ersten Einlass (31) und dem Auslass (35) angeordnet ist.

2. Verdampfer (2) nach Anspruch 1,
**dadurch gekennzeichnet, dass**
der Kanal (20) einen ersten Endbereich (21) und einen zweiten Endbereich (22) aufweist, und dass der erste Einlass (31) im ersten Endbereich (21) und der Auslass (35) im zweiten Endbereich (22) angeordnet ist.

3. Verdampfer (2) nach Anspruch 1 oder 2,
**dadurch gekennzeichnet, dass**
der Kanal (20) eine erste Leitungslänge (L1) zwischen dem ersten Einlass (31) und dem Auslass (35) und eine zweite Leitungslänge (L2) zwischen dem zweiten Einlass (32) und dem Auslass (35) aufweist, wobei folgendes gilt: L2 < L1, vorzugsweise L2 ≤ ½ L1.

4. Verdampfer (2) nach einem der Ansprüche 1 bis 3,
**dadurch gekennzeichnet, dass**
der Verdampfer (2) als Plattenverdampfer ausgebildet ist.

5. Verdampfer (2) nach einem der vorgenannten Ansprüche,
**dadurch gekennzeichnet, dass**
der erste Einlass (31), der zweite Einlass (32), der Auslass (35) und der Kanal (20) in einer gemeinsamen Ebene angeordnet sind.

6. Verdampfer (2) nach einem der vorgenannten Ansprüche,
**dadurch gekennzeichnet, dass**
ein Rahmen (11) und zwei auf gegenüberliegenden Seiten des Rahmens (11) angeordnete Platten (12, 13) den Kanal (20) umschließen, und dass der Kanal (20) mäanderförmig zwischen den zwei Platten (12, 13) geführt ist.

7. Verdampfer (2) nach einem der vorgenannten Ansprüche,
**dadurch gekennzeichnet, dass**
der Kanal (20) durch abwechselnd von gegenüberliegenden Seiten des Rahmens (11) ragende Umlenkmittel (15) gebildet ist.

8. Verdampfer (2) nach einem der vorgenannten Ansprüche,
**dadurch gekennzeichnet, dass**
die Umlenkmittel (15) zueinander beabstandet angeordnet sind.

9. Verdampfer (2) nach einem der vorgenannten Ansprüche,
**dadurc hgekennzeichnet**, dass
an einem freien Ende (16) von mindestens einem der mindestens einen Umlenkmittel (15) ein Umlenkabschnitt (25) angeordnet ist.

10. Verdampfer (2) nach einem der vorgenannten Ansprüche,,
**dadurch gekennzeichnet, dass**
in einem Umlenkabschnitt (25) der zweite Einlass (32) angeordnet ist.

11. Verdampfer (2) nach einem der vorgenannten Ansprüche,
**dadurch gekennzeichnet, dass**
ein Kanalquerschnitt (A1) zwischen dem ersten Einlass (31) und dem zweiten Einlass (32) kleiner ist, als ein zweiter Kanalquerschnitt (A2) zwischen dem zweiten Einlass (32) und dem Auslass (35).

12. Klimaschrank (1), insbesondere Konstantklimaschrank,
mit einem Innenraum (15) und einem zur Einstellung einer Temperatur und einer Feuchtigkeit in dem Innenraum konfigurierten Kältekreislauf (3) mit einem Verdichter (5) und einem Verdampfer (2) nach einem der vorgenannten Ansprüche.

13. Klimaschrank (1) nach Anspruch 12
**dadurch gekennzeichnet, dass**
der Verdichter (5) eingangsseitig mit dem Auslass (35) und ausgangsseitig parallelgeschaltet mit dem ersten Einlass (31) und dem zweiten Einlass (32) verbunden ist.

14. Klimaschrank (1) nach Anspruch 12 oder 13,
**dadurch gekennzeichnet, dass**
der Verdichter (5) ein Kolbenverdichter ist.
